# FASCICULE DE BREVET EUROPEEN

(11) **EP 1 199 009 B1**
(45) Date de publication et mention de la délivrance du brevet: **05.06.2002**
(21) Numéro de dépôt: 00440283.0
(22) Date de dépôt: 19.10.2000
(51) Int. Cl.: A47B 21/00, A47B 17/03, F16B 12/20

(54) **Pince de fixation d'une structure d'allure verticale à un plateau horizontal**
Klammer zur Befestigung einer vertikal orientierten Struktur an einer horizontalen Platte
Clamp for fastening a vertically orientated structure to a horizontal board

(43) Date de publication de la demande: 24.04.2002
(73) Titulaire: Details (Société Anonyme), 67380 Lingolsheim (FR)
(72) Inventeur: Reithler, Christophe, 67590 Schweighouse sur Moder (FR)
(74) Mandataire: Littolff, Denis

(56) Documents cités:
- DE-A- 19 653 185
- JP-A- 7 275 044
- US-A- 5 609 112

## Description

La présente invention concerne une pince de fixation d'une structure d'allure verticale de type montant ou colonnette à un plateau horizontal constituant par exemple un plan de travail, ladite fixation étant réalisée au niveau de la bordure périphérique du plateau.

Sur un plan plus général, le dispositif de l'invention a trait à l'assemblage et la solidarisation de pièces de mobilier de bureau équipant des environnements du type bureau paysager, composé notamment de plans de travail horizontaux, de piétements et de panneaux ou éléments verticaux que l'on peut agencer suivant de multiples combinaisons donnant des configurations de bureaux variées.

Dans la conception usuelle des modules de bureaux paysagers, tous les éléments qui participent à la configuration modulaires des structures sont cohérents les uns avec les autres, parce qu'ils font en général partie d'une gamme réalisée par un même constructeur. Ainsi, les plateaux formant plan de travail ne peuvent être agencés que sur un type de piétements, les colonnettes verticales qui forment ce qu'il est convenu d'appeler le troisième niveau sont elles-mêmes étroitement liées aux choix technologiques ayant présidé à la conception des niveaux inférieurs, etc. Les possibilités de réglage sont également limitées, et il n'est en particulier pas possible de procéder au montage de panneaux ou d'éléments suspendus à n'importe quel endroit au-dessus des plans de travail.

Le document DE-A-196 53 185 décrit un profilé permettant la fixation d'un montant à un plateau horizontal constituant le plan de travail d'une cuisine aménagée. Ce profilé, se développant sur toute la longueur des éléments hauts de ladite cuisine, ne constitue pas à proprement parler une pince de fixation, et n'en possède pas la souplesse d'utilisation, notamment au niveau de la liberté du positionnement par rapport à un plateau horizontal.

De plus, il ne permet pas le passage d'éventuels câbles d'un espace inférieur situé sous le plateau horizontal à un espace supérieur situé au-dessus de celui-ci, problème qui est essentiel dans le domaine du mobilier de bureau, du fait de la multiplication des câbles aux deuxième et troisième niveaux.

La présente invention se propose de remédier à ces inconvénients, et de proposer un dispositif de fixation universel, c'est-à-dire qui permet la fixation d'éléments verticaux constituant un troisième niveau éventuel,
du type panneau de séparation, à n'importe quel endroit en périphérie de plateaux horizontaux eux-mêmes d'un type quelconque en permettant de plus le guidage des câbles de part et d'autre desdits plateaux.

A cet effet, le dispositif de l'invention, qui prend la forme d'une pince de fixation constituée des éléments suivants :
- une embase adaptable à une structure verticale supérieure, pourvue de moyens de fixation à cette dernière ou configurée pour l'utilisation de moyens de fixation usuels, le côté de ladite embase opposé au côté de fixation de ladite structure verticale présentant une surface plane d'allure destinée à être disposée perpendiculairement a l'axe de ladite structure verticale;
- une mâchoire située en vis-à-vis, à distance et sensiblement parallèlement à ladite embase, formant avec cette dernière un volume apte à recevoir la bordure périphérique de tout type de plateau horizontal, ladite mâchoire étant au surplus munie de moyens de fixation de la pince à ladite bordure ou configurée pour coopérer avec des moyens de fixation usuels ;
- une paroi de liaison entre l'embase et la mâchoire, d'allure sensiblement perpendiculaire à celles-ci, qui les maintient à une distance prédéterminée l'une de l'autre et constitue le fond d'un logement qu'elles définissent ensemble, faisant au surplus office de butée pour la bordure du plateau ;
est caractérisé en ce que la pince comprend un canal de guidage comportant une portion verticale destinée à déboucher au niveau du plateau horizontal, suivie d'une portion horizontale destinée à déboucher sous ce dernier et permettant de masquer, protéger et guider des câbles souples en provenance de la structure verticale, et à destination du volume situé sous ledit plateau horizontal.

Outre la fonctionnalité permettant comme indiqué la fixation d'un élément appartenant au troisième niveau à un plateau participant au second niveau, le dispositif de l'invention permet donc de faciliter le passage de câbles d'un espace supérieur à un espace inférieur séparés par le plan de travail.

Il s'agit comme on l'a mentionné d'un problème récurrent des structures modulaires de mobilier de bureau, qui ne gèrent pas ou de façon très insuffisante le passage et la distribution des câbles. Or, il est patent que de nos jours, les outils de travail équipant chaque poste sont de plus en plus largement informatisés, et nécessitent par conséquent une alimentation électrique, voire la connexion à un réseau d'entreprise. De même, chaque poste dispose de son téléphone qu'il est nécessaire de câbler. Enfin, l'ajout d'imprimantes, fax, etc. nécessite également le passage de câbles véhiculant des données ou de l'énergie pour assurer leur bon fonctionnement.

Selon une possibilité configurationnelle, l'embase de la pince de l'invention présente un volume d'allure prismatique autorisant son ajustement dans un évidement de volume correspondant pratiqué dans la structure d'allure verticale.

En particulier, si l'on prend l'exemple d'un montant latéral d'un panneau vertical de cloisonnement, ce montant peut présenter une base dotée d'un évidement pouvant loger l'embase de la pince. La correspondance des volumes, qui peut sembler banale, témoigne cependant d'une volonté de faciliter le montage des différents éléments, car elle procure une fonction de guidage qui ne laisse aucune liberté à l'utilisateur, qui procède intuitivement au cours de l'assemblage, et ne peut pas se tromper dans l'assemblage des éléments.

Cette embase comporte de préférence au moins un orifice traversant, d'axe perpendiculaire à la surface plane, et dont l'ouverture voisine de cette dernière débouche au fond d'un évidement pratiqué dans ladite surface plane. Cet orifice permet la fixation de la pince par exemple par boulonnage à une structure d'allure verticale.

Le boulonnage, choisi comme exemple de moyen de fixation très classique, peut être remplacé par des moyens équivalents s'il y a lieu. L'évidement pratiqué dans la surface plane permet de noyer le cas échéant les têtes de vis, afin de conserver à ladite surface sa planéité, qui est un élément essentiel dans le fonctionnement de la fixation de la pince à un plateau horizontal.

Selon une possibilité, la mâchoire est également dotée d'au moins un orifice traversant, muni d'un filetage interne, et d'axe perpendiculaire à la surface plane de l'embase, permettant l'insertion d'au moins une tige filetée de serrage prévue pour coopérer avec un plateau horizontal.

Ce mode de fixation traditionnel met en exergue la fonction exacte de la surface plane, sur laquelle s'applique alors une pression obtenue par serrage des éléments filetés. La bordure du plateau horizontal est enserré entre ladite surface plane et les extrémités libres des tiges filetées, qui sont munies à cet effet d'embouts plans.

De préférence, que ce soit pour la fixation de l'embase à la structure verticale ou de la pince à un plateau horizontal, les orifices traversant sont au nombre de deux.

Compte tenu de la structure réelle de la pince de l'invention, qui sera illustrée plus en détail dans la suite, cette double fixation permet d'équilibrer les contraintes mécaniques.

Pour préserver l'apparence esthétique de la pince, lesdits orifices de la mâchoire présentent au surplus une cavité de diamètre supérieur, située à leur extrémité débouchant dans la paroi de la mâchoire opposée à sa surface en regard de l'embase, c'est-à-dire dans sa surface extérieure.

Cette cavité permet de noyer la tête des vis ou tiges filetées dans le volume global de la pince.

Pour remplir une fonctionnalité additionnelle, la mâchoire présente un orifice borgne doté d'un filetage, d'axe parallèle au plan de la surface plane, perpendiculaire à l'axe dudit ou desdits orifices qui la traverse(nt), et débouchant vers l'intérieur du volume située sous le plateau horizontal.

Cet orifice permet la fixation d'accessoires supplémentaires, prenant notamment en charge un guidage ultérieur des câbles souples à destination des prises équipant la pièce, le plus souvent situés au niveau du sol ou des plinthes.

Enfin, la mâchoire comporte un évidement pratiqué dans sa paroi en regard de la surface plane, débouchant librement dans une des façades extérieures de ladite mâchoire, l'extrémité opposée dudit évidement étant clos par une paroi.

Comme on le verra plus en détail dans la suite, cet évidement participe à la fonction de guidage et de protection des câbles souples en provenance du troisième niveau.

De préférence, cet évidement se développe selon un axe parallèle à la surface plane, en direction du volume situé sous le plateau horizontal lorsque la pince y est fixée.

Ceci est cohérent avec l'existence de l'orifice borgne, débouchant sensiblement au même niveau. Les câbles débouchent bien entendu à proximité de l'accessoire qui les prend en charge, fixé à l'aide dudit orifice borgne.

Pour en terminer avec la fonction de guidage et de protection des câbles souples, la paroi de liaison comporte une portion en forme de goulotte ouverte à son extrémité donnant sur l'embase, et dont l'autre extrémité débouche dans l'évidement de la mâchoire, ladite goulotte étant orientée verticalement lorsque la pince est fixée à un plateau horizontal.

En somme, le canal de guidage ainsi constitué comporte une portion verticale, constituée par la goulotte, commençant au niveau de la surface supérieure du plateau horizontal, suivi d'une portion horizontale, constituée par l'évidement, se développant parallèlement à la surface inférieure dudit plateau, au contact de celui-ci, amenant en fait les câbles de manière masquée sous ledit plateau.

De préférence, la pince de fixation de l'invention est fabriquée en matériau synthétique.

Dans ce cas, les filetages sont, de préférence encore, réalisés à l'aide d'inserts métalliques intégrés dans la pince.

L'invention va à présent être décrite plus en détail, en référence aux figures annexées, pour lesquelles :
- la figure 1 est une vue en perspective d'une pince de fixation selon l'invention ;
- la figure 2 est une vue en perspective de la même pince, vue selon un autre angle ;
- les figures 3 à 5 sont des vues en élévation de la même pince selon trois directions perpendiculaires deux à deux.

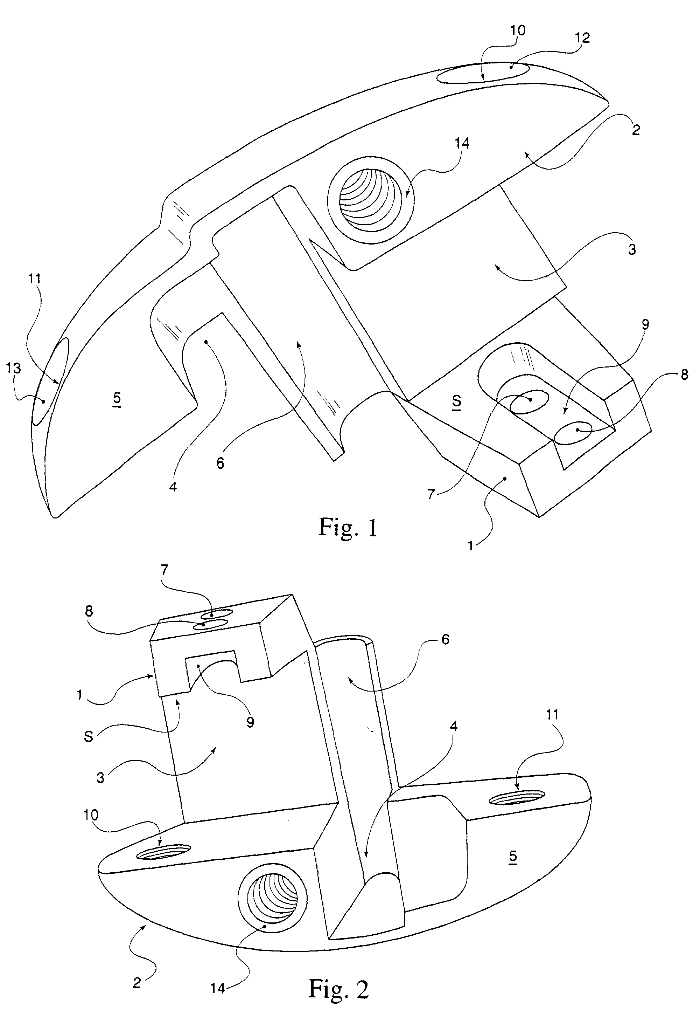

En référence à la figure 1, la pince selon la présente invention comporte une embase (1) sensiblement parallèle à une mâchoire (2), ces éléments étant maintenus à distance l'un de l'autre par une paroi (3) orientée sensiblement perpendiculairement à elles.

La perspective de la figure 1 montre la pince retournée, puisque l'embase (1) est en principe située au-dessus de la mâchoire (2), comme cela apparaît par exemple en figure 2.

Les orientations données aux deux perspectives permettent néanmoins de se faire une idée claire de la configuration exacte de la pince. La mâchoire (2) comporte un évidement d'allure transversal (4) débouchant dans son côté (5). Il s'agit du côté qui est orienté vers l'intérieur du volume disposé sous le plateau horizontal formant plan de travail. A son autre extrémité, cet évidement (4) communique avec une goulotte (6) pratiquée dans la paroi (3), dont l'extrémité supérieure débouche au niveau de l'embase (1).

L'évidement (4) et la goulotte (6) constituent ensemble un canal de guidage coudé permettant de changer l'orientation des câbles issus de la structure verticale, afin de les réorienter selon une direction horizontale à leur débouché sous le plan de travail. Ce canal coudé permet également de masquer et de protéger les câbles souples, qui n'apparaissent pas aux yeux de l'utilisateur.

Dans l'exemple de pince de l'invention qui est représenté aux figures 1 et 2, l'embase (1) comporte deux orifices traversant (7, 8) dont l'extrémité orientée vers l'intérieur du logement (défini entre l'embase (1) et la mâchoire (2) de la pince) débouche dans un évidement (9) permettant notamment de noyer les têtes d'éventuelles vis de fixation.

Il est en effet impératif de conserver à la surface (S) sa planéité, car celle-ci est fonctionnellement essentielle, puisqu'elle représente la surface qui vient au contact du plateau formant plan de travail lors du serrage de la pince.

La mâchoire (2) comporte elle-même des orifices traversant (10,11), munis d'un filetage interne, et dont l'extrémité débouchant sur la portion arrondie externe de la mâchoire comporte une portion de diamètre élargie (12, 13) permettant également de noyer les têtes de vis et de préserver l'aspect esthétique du produit.

Enfin, la mâchoire comporte un autre orifice fileté (14) qui n'est pas traversant, qui débouche sur la face (5) à proximité du débouché de l'évidement (4), et permet l'installation d'un accessoire permettant la prise en charge vers le sol des câbles guidés par le conduit coudé.

Les orifices (10, 11, 14) sont filetés et munis à cet effet d'inserts métalliques, car la résistance mécanique du matériau synthétique utilisé pour la fabrication du reste de la pince est moins apte à faire face aux cisaillements des filets que le métal utilisé pour les inserts.

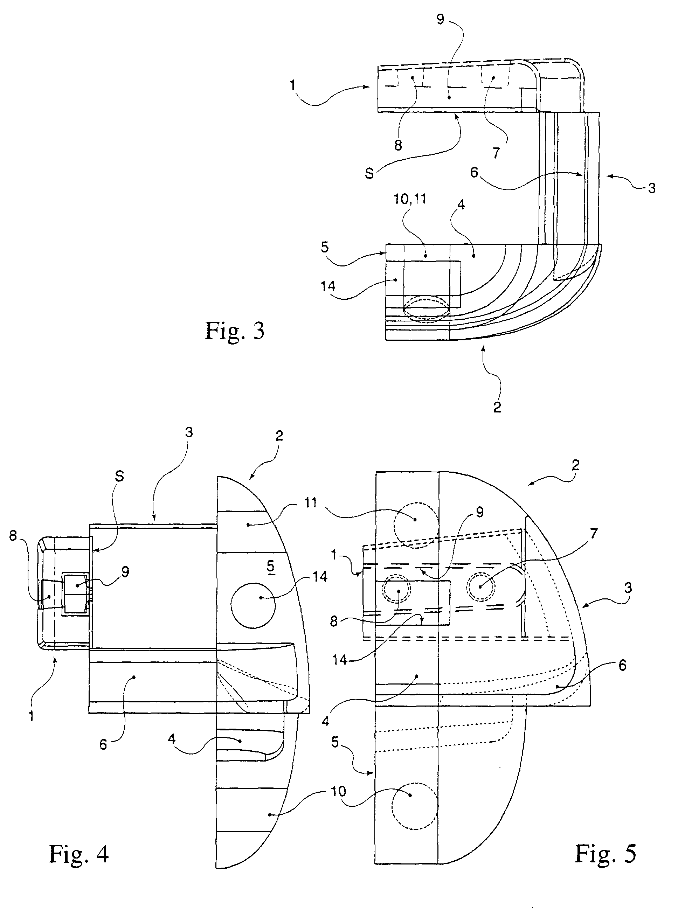

En référence aux figures 3 à 5, les mêmes éléments que dans les figures 1 et 2 apparaissent avec une plus grande précision dimensionnelle qu permet de mieux comprendre le produit de l'invention. En revanche, les perspectives faisant l'objet des figures 1 et 2 permettent de se faire une idée plus rapide de la configuration globale de la pince de l'invention.

Ainsi, la structure en U réalisée par l'orientation relative de l'embase (1), de la paroi de liaison (3) et de la mâchoire (2) est particulièrement visible en figure 3. Dans la réalisation qui est illustrée par ces figures, les deux surfaces en vis-à-vis de l'embase et de la mâchoire (2) sont parfaitement parallèles. Il s'agit d'un cas particulier qui n'est pas forcément imposé par des nécessités fonctionnelles. En revanche, comme on l'a déjà souligné, la surface (S) de l'embase (1) doit être parfaitement plane.

Il est cependant évident que la configuration de pince de fixation de l'invention qui est illustrée dans les figures 1 à 5 ne constitue qu'un mode de réalisation possible de ladite pince, qui n'est nullement exhaustif de l'invention. Celle-ci englobe au contraire toutes les variantes de formes et de configurations qui sont à la portée de l'homme de l'art.

## Revendications

1. Pince de fixation d'une structure d'allure verticale de type montant ou colonnette à un plateau horizontal du type plan de travail, ladite fixation étant réalisée au niveau de la bordure périphérique dudit plateau, ladite pince étant constituée des éléments suivants :
- une embase (1) adaptable à la structure verticale et pourvue de moyens de fixation à cette dernière ou configurée pour l'utilisation de moyens de fixation usuels, le côté de ladite embase (1) opposé au côté de fixation de ladite structure verticale présentant une surface plane (S) d'allure destinée à être disposée perpendiculairement à l'axe de cette structure verticale,
- une mâchoire (2) située en vis-à-vis, à distance et sensiblement parallèlement à ladite embase (1), formant avec cette dernière un volume apte à recevoir la bordure périphérique de tout type de plateau horizontal, ladite mâchoire (2) étant au surplus munie de moyens de fixation de la pince à ladite bordure ou configurée pour coopérer avec des moyens de fixation usuels ;
- une paroi de liaison (3) entre l'embase (1) et la mâchoire (2), d'allure sensiblement perpendiculaire à celles-ci, qui les maintient à une distance prédéterminée l'une de l'autre et constitue le fond d'un logement qu'elles définissent ensemble, faisant au surplus office de butée pour la bordure du plateau ;
**caractérisée en ce que** la pince comprend un canal de guidage comportant une portion verticale (6) destinée à déboucher au niveau du plateau horizontal, suivie d'une portion horizontale (4) destinée à déboucher sous ce demier et permettant de masquer, protéger et guider des câbles souples en provenance de la structure verticale, et à destination du volume situé sous ledit plateau horizontal.

2. Pince de fixation selon la revendication précédente, **caractérisée en ce que** l'embase (1) présente un volume d'allure prismatique autorisant son ajustement dans un évidement de volume correspondant pratiqué dans la structure d'allure verticale.

3. Pince de fixation selon l'une des revendications précédentes, **caractérisée en ce que** l'embase (1) comporte au moins un orifice (7, 8) la traversant, d'axe perpendiculaire à la surface plane (S), et dont l'ouverture voisine de cette dernière débouche au fond d'un évidement (9) pratiqué dans ladite surface plane (S), permettant sa fixation par exemple par boulonnage à ladite structure d'allure verticale.

4. Pince de fixation selon l'une quelconque des revendications précédentes, **caractérisée en ce que** la mâchoire (2) est dotée d'au moins un orifice (10, 11) traversant muni d'un filetage interne, d'axe perpendiculaire à la surface plane (S), permettant l'insertion d'au moins une tige filetée de serrage, prévue pour coopérer avec un plateau horizontal.

5. Pince de fixation selon l'une des revendications 3 et 4, **caractérisée en ce que** les orifices (7, 8, 10, 11) traversant sont au nombre de deux.

6. Pince de fixation selon la revendication 4, **caractérisée en ce que** les orifices (10, 11) munissant la mâchoire présentent une cavité (12, 13) de diamètre supérieur située à leur extrémité débouchant dans la paroi externe de la mâchoire (2) opposée à sa surface en regard de l'embase (1).

7. Pince de fixation selon l'une quelconque des revendications précédentes, **caractérisée en ce que** la mâchoire (2) présente un orifice borgne (14), doté d'un filetage d'axe parallèle au plan de la surface plane (S), perpendiculaire à l'axe dudit ou desdits orifices (10, 11) qui la traverse(nt), et débouchant vers l'intérieur du volume située sous le plateau horizontal.

8. Pince de fixation selon l'une quelconque des revendications précédentes, **caractérisée en ce que** la mâchoire (2) comporte un évidement (4) constituant la portion horizontale du canal de guidage, ledit évidement (4) étant pratiqué dans la paroi de la mâchoire (2) en regard de la surface plane (S), débouchant dans une des façades extérieures (5) de ladite mâchoire (2), l'extrémité opposée dudit évidement étant clos par une paroi.

9. Pince de fixation selon la revendication précédente, **caractérisée en ce que** l'évidement (4) se développe selon un axe parallèle à la surface plane (S), en direction du volume situé sous le plateau horizontal lorsque la pince y est fixée.

10. Pince de fixation selon l'une des revendications 8 et 9, **caractérisée en ce que** la paroi de liaison (3) comporte une portion en forme de goulotte (6) constituant la portion verticale du canal de guidage, ladite goulotte étant ouverte à son extrémité donnant sur l'embase (1), et dont l'autre extrémité débouche dans l'évidement (4) de la mâchoire (2), ladite goulotte (6) étant orientée verticalement lorsque la pince est fixée à un plateau horizontal.

11. Pince de fixation selon l'une quelconque des revendications précédentes, **caractérisée en ce qu'**elle est fabriquée en matériau synthétique.

12. Pince de fixation selon la revendication précédente, **caractérisée en ce que** les filetages sont réalisés à l'aide d'inserts métalliques intégrés dans la pince.

## Patentansprüche

1. Klemme für die Befestigung einer Struktur mit vertikalem Verlauf des Typs Stütze oder Distanzsäule an einer horizontalen Platte des Typs Arbeitsebene, wobei die Befestigung auf Höhe des Umfangsrandes der Platte erfolgt, wobei die Klemme aus den folgenden Elementen gebildet ist:
- einer Fußplatte (1), die an die vertikale Struktur angepaßt werden kann und mit Mitteln für die Befestigung an dieser letzteren versehen ist oder für die Verwendung mit üblichen Befestigungsmitteln konfiguriert ist, wobei die Seite der Fußplatte (1), die der Seite für die Befestigung der vertikalen Struktur gegenüberliegt, eine ebene Oberfläche (S) mit einem Verlauf, der dazu bestimmt ist, senkrecht zur Achse dieser vertikalen Struktur angeordnet zu werden, aufweist;
- einer Klemmbacke (2), die gegenüber der Fußplatte (1) in einem Abstand von dieser und im wesentlichen parallel zu dieser angeordnet ist und mit dieser letzteren ein Volumen bildet, das den Umfangsrand jeglichen Typs einer horizontalen Platte aufnehmen kann, wobei die Klemmbacke (2) darüber hinaus mit Mitteln für die Befestigung der Klemme am Rand versehen oder so konfiguriert ist, daß sie mit gewöhnlichen Befestigungsmitteln zusammenwirken kann;
- einer Verbindungswand (3) zwischen der Fußplatte (1) und der Klemmbacke (2) mit einem hierzu im wesentlichen senkrechten Verlauf, die diese in einem vorgegebenen Abstand voneinander hält und den Boden eines Aufnahmesitzes bildet, den sie gemeinsam definieren, und darüber hinaus einen Anschlag für den Rand der Platte bildet;
**dadurch gekennzeichnet,**
**daß** die Klemme einen Führungskanal aufweist, der einen vertikalen Abschnitt (6) umfaßt, der dazu bestimmt ist, in die Ebene der horizontalen Platte zu führen, gefolgt von einem horizontalen Abschnitt (4), der dazu bestimmt ist, unter diese letztere zu führen, und ermöglicht, die elastischen Kabel, die von der vertikalen Struktur ausgehen und zu dem unter der horizontalen Platte befindlichen Volumen verlaufen, abzudecken, zu schützen und zu führen.

2. Befestigungsklemme nach dem vorhergehenden Anspruch,
**dadurch gekennzeichnet,**
**daß** die Fußplatte (1) ein Volumen mit prismenförmigem Verlauf aufweist, das ihre Einpassung in eine entsprechende Aussparung des Volumens zuläßt, die in der Struktur mit vertikalem Verlauf ausgebildet ist.

3. Befestigungsklemme nach einem der vorhergehenden Ansprüche,
**dadurch gekennzeichnet,**
**daß** die Fußplatte (1) wenigstens ein Loch (7, 8) aufweist, das durch sie verläuft und eine zu der ebenen Oberfläche (S) senkrechte Achse besitzt, wobei seine Mündung in der Nähe dieser letzteren in den Boden einer Aussparung (9) führt, die in der ebenen Oberfläche (S) ausgebildet ist, und ihre Befestigung beispielsweise durch Verschraubung mit der Struktur mit vertikalem Verlauf ermöglicht.

4. Befestigungsklemme nach einem der vorhergehenden Ansprüche,
**dadurch gekennzeichnet,**
**daß** die Klemmbacke (2) mit wenigstens einem Loch (10, 11) versehen ist, das durch sie verläuft, ein Innengewinde aufweist und eine zur ebenen Oberfläche (S) senkrechte Achse besitzt, die das Einführen wenigstens eines mit Gewinde versehenen Klemmstifts ermöglicht, der dazu vorgesehen ist, mit einer horizontalen Platte zusammenzuwirken.

5. Befestigungsklemme nach einem der Ansprüche 3 und 4,
**dadurch gekennzeichnet,**
**daß** die Löcher (7, 8, 10, 11) die durch sie verlaufen, in der Anzahl zwei vorhanden sind.

6. Befestigungsklemme nach Anspruch 4,
**dadurch gekennzeichnet,**
**daß** die Löcher (10, 11), mit der die Klemmbacke versehen ist, einen Hohlraum (12, 13) mit größerem Durchmesser aufweisen, der sich an ihrem Ende befindet, das zu der Außenwand der Klemmbacke (2) gegenüber ihrer der Fußplatte (1) zugewandten Oberfläche führt.

7. Befestigungsklemme nach einem der vorhergehenden Ansprüche,
**dadurch gekennzeichnet,**
**daß** die Klemmbacke (2) ein Blindloch (14) aufweist, das mit einem Gewinde versehen ist und eine zur Ebene der ebenen Oberfläche (S) parallele Achse aufweist, die zur Achse der Löcher (10, 11), die durch sie verlaufen, senkrecht ist, und zu dem unter der horizontalen Platte befindlichen Volumen führt.

8. Befestigungsklemme nach einem der vorhergehenden Ansprüche,
**dadurch gekennzeichnet,**
**daß** die Klemmbacke (2) eine Aussparung (4) aufweist, die den horizontalen Abschnitt des Führungskanals bildet und in der Wand der Klemmbacke (2), die der ebenen Oberfläche (S) zugewandt ist, ausgebildet ist und zu einer der äußeren Flächen (5) der Klemmbacke (2) führt, wobei das gegenüberliegende Ende der Aussparung durch eine Wand verschlossen ist.

9. Befestigungsklemme nach dem vorhergehenden Anspruch,
**dadurch gekennzeichnet,**
**daß** die Aussparung (4) längs einer zu der ebenen Oberfläche (S) parallelen Achse in Richtung zu dem unter der horizontalen Platte befindlichen Volumen verläuft, wenn die Klemme daran befestigt ist.

10. Befestigungsklemme nach einem der Ansprüche 8 und 9,
**dadurch gekennzeichnet,**
**daß** die Verbindungswand (3) einen hohlkehlenförmigen Abschnitt (6) umfaßt, der den vertikalen Abschnitt des Führungskanals bildet, wobei die Hohlkehle an ihrem an die Fußplatte (1) anstoßendem Ende offen ist und mit ihrem anderen Ende zu der Aussparung (4) der Klemmbacke (2) führt, wobei die Hohlkehle (4) vertikal orientiert ist, wenn die Klemme an einer horizontalen Platte befestigt ist.

11. Befestigungsklemme nach einem der vorhergehenden Ansprüche,
**dadurch gekennzeichnet,**
**daß** sie aus Kunststoff hergestellt ist.

12. Befestigungsklemme nach dem vorhergehenden Anspruch,
**dadurch gekennzeichnet,**
**daß** die Gewinde mit Hilfe metallischer Einsätze, die in die Klemme integriert sind, verwirklicht sind.

## Claims

1. Clamp for fastening a vertically orientated structure of the post or column type to a horizontal board of the work surface type, the said fastening being carried out at the peripheral edge of the said board, the said clamp being formed from the following elements:
- a projection (1) which can be adapted to the vertical structure and is provided with means for fastening thereto or is configured for the use of conventional fastening means, the side of the said projection (1) opposite the side for fastening the said vertical structure has a planar surface (S) of an orientation intended to be disposed perpendicular to the axis of this vertical structure;
- a block (2) located facing, spaced apart from and substantially parallel to the said projection (1), forming therewith a space able to receive the peripheral edge of any type of horizontal board, the said block (2) additionally being provided with means for fastening the said clamp to the said edge or being configured to cooperate with conventional fastening means;
- a connecting wall (3) between the projection (1) and the block (2), which is orientated substantially perpendicular to the projection and block, keeps them at a predetermined distance from each other and constitutes the base of a housing which they define together, additionally acting as an abutment for the edge of the board;
**characterised in that** the clamp has a guide channel comprising a vertical portion (6) intended to open onto the horizontal board, followed by a horizontal portion (4) intended to open out below this horizontal board and making it possible to conceal, protect and guide flexible cables going from the vertical structure to the space located under the said horizontal board.

2. Fastening clamp according to the preceding claim, **characterised in that** the projection (1) is of a prism-like shape permitting it to be fitted in a recess of a corresponding volume provided in the vertically orientated structure.

3. Fastening clamp according to one of the preceding claims, **characterised in that** the projection (1) has at least one orifice (7, 8) passing through it, having an axis perpendicular to the planar surface (S) and of which the opening adjoining this planar surface issues at the bottom of a recess (9) provided in the said planar surface (S), permitting it to be fastened to the said vertically orientated structure, for example by bolting.

4. Fastening clamp according to any one of the preceding claims, **characterised in that** the block (2) is provided with at least one through orifice (10, 11) provided with an internal thread, with an axis perpendicular to the planar surface (S), permitting insertion of at least one threaded tightening rod provided to cooperate with a horizontal board.

5. Fastening clamp according to one of claims 3 and 4, **characterised in that** the through orifices (7, 8, 10, 11) are two in number.

6. Fastening clamp according to claim 4, **characterised in that** the orifices (10, 11) provided in the block have a cavity (12, 13) of a greater diameter located at their end issuing into the external wall of the block (2) opposite its surface facing the projection (1).

7. Fastening clamp according to any one of the preceding claims, **characterised in that** the block (2) has a blind orifice (14) provided with threading with an axis parallel to the plane of the planar surface (S), perpendicular to the axis of the said orifice or orifices (10, 11) which pass(es) through the planar surface, and opening out into the space located under the horizontal board.

8. Fastening clamp according to any one of the preceding claims, **characterised in that** the block (2) has a recess (4) forming the horizontal portion of the guide channel, the said recess (4) being provided in the wall of the block (2) facing the planar surface (S), opening out into one of the external faces (5) of the said block (2), the opposite end of the said recess being closed by a wall.

9. Fastening clamp according to the preceding claim, **characterised in that** the recess (4) proceeds along an axis parallel to the planar surface (S), towards the space located under the horizontal board when the clamp is fixed thereto.

10. Fastening clamp according to one of claims 8 and 9, **characterised in that** the connecting wall (3) has a portion in the form of a trough (6) forming the vertical portion of the guide channel, the said trough being open at its end issuing onto the projection (1), and having its other end opening out into the recess (4) in the block (2), the said trough (6) being orientated vertically when the clamp is fixed to a horizontal board.

11. Fastening clamp according to any one of the preceding claims, **characterised in that** it is produced from synthetic material.

12. Fastening clamp according to the preceding claim, **characterised in that** the threads are produced using metal inserts integrated into the clamp.
